# EUROPEAN PATENT SPECIFICATION

(11) **EP 0 242 123 B1**
(45) Date of publication and mention of the grant of the patent: **23.03.1994**
(21) Application number: 87303080.3
(22) Date of filing: 09.04.1987
(51) Int. Cl.: H04N 5/44, H04N 3/22

(54) **Television deflection apparatus**
Ablenkungsgerät für ein Fernsehgerät
Appareil de déflexion pour télévision

(30) Priority: 11.04.1986 GB 8608876; 18.04.1986 GB 8609572; 30.04.1986 US 857375; 18.12.1986 US 943044
(43) Date of publication of application: 21.10.1987
(73) Proprietor: RCA Thomson Licensing Corporation, Princeton, NJ 08540 (US)
(72) Inventor: Den Hollander, Willem, CH-8952 Schlieren (CH); Leonardi, Giovanni Michele, CH-8048 Zurich (CH)
(74) Representative: Pratt, Richard Wilson

(56) References cited:
- EP-A- 0 162 116
- US-A- 4 544 864
- IBM TECHNICAL DISCLOSURE BULLETIN, vol. 28, no. 8, January 1986, pages 3292-3293, New York, US; "Variable interface circuit for displays"
- PATENT ABSTRACTS OF JAPAN, vol. 6, no. 170 (E-128)[1048], 3rd September 1982;& JP-A-57 84 681 (NIPPON DENKI K.K.) 27-05-1982

## Description

This invention relates to television deflection systems such as systems arranged to increase the field rate of displayed images for reducing the visibility of flicker.

The threshold of perception of field flicker in a television display system is a function of the flicker frequency and the brightness of the display. Over the years, displays have increased in brightness to the point where flicker is noticeable even in relatively high field rate systems (e.g., the NTSC 60 Hz system) and clearly objectionable in lower field rate systems (e.g., the PAL 50 Hz system). A solution to this problem is to double the field rate of displayed images. In one prior art system, a video input signal is stored in a field memory. Each stored field is recovered or "read" twice from the memory and displayed on a display scanned at double the line rate and double the field rate of the incoming video signal, thereby doubling the flicker frequency of displayed images and thus reducing the visibility of flicker.

European Patent Application EP-A-0 241 284, filed on 9.4.87, published on 14.10.87 describes a television display arrangement that provides flicker reduction. In the den Hollander et. al. arrangement, an interlaced baseband television input signal having a given field rate is provided. A memory has a write cycle for storing a field of the input signal and first and second read cycles for recovering the previously stored field two times during one write cycle, to provide a video output signal of double the given field rate. The output signal provides picture information for display on a display device. A timing unit, responsive to the video input signal, supplies to the memory a read control signal having a pulse waveform that repeats on a two-field basis, and supplies to the display a vertical synchronizing signal having a pulse waveform that repeats on a four-field basis. The pulses of the vertical synchronizing pulse waveform are phase modulated on a field basis with a nominal frequency of double the given field rate. The vertical synchronizing pulse waveform pattern is selected to provide a displayed image on the display in which even fields overlay even fields, odd fields overlay odd fields, and in which even and odd field pairs are interlaced. Each pulse of the vertical synchronizing signal initiates a corresponding vertical retrace scanning interval. The pulses of the vertical synchronizing pulse waveform cause a corresponding phase modulation of the vertical deflection current. Additionally, they cause the durations of corresponding vertical scanning cycles to vary on a field basis and to repeat on a four-field basis.

A conventional vertical deflection circuit may include a sawtooth generator, synchronized to a synchronizing signal, that generates a drive signal having a sawtooth waveform. During retrace, a capacitor is discharged by a switch; during trace it is charged by a current source. The drive signal is coupled to a switching circuit that produces a deflection current having a corresponding sawtooth waveform. The drive signal includes a ramping portion that corresponds with vertical trace, such that the beginning time of the ramping portion corresponds with a deflection current that causes scanning at the top of the raster of the display.

Because of the phase modulation of the pulse waveform of the vertical synchronizing signal that is required in, for example, the den Hollander et.al. arrangement, the peak amplitude of the drive signal at the end of vertical trace may also change on a field basis in accordance with the pulse waveform pattern.

Different peak amplitudes of the drive signal may cause the beginning time of the ramping portion to be different relative to the corresponding pulse of the vertical synchronizing signal that causes such ramping portion. This is so because the discharge time of the capacitor of the sawtooth generator may vary in accordance with the peak amplitude of the drive signal that may be different in different fields. The result is that the phase of the trace portion of the deflection current may, disadvantageously, vary from that established by the phase modulated vertical synchronizing signal. Consequently, the requirement that an even field should overlap an even field, an odd field should overlay an odd field, and even and odd field pairs should interlace, disadvantageously, may not be completely fulfilled.

It may therefore be desirable in each deflection cycle to prevent, for example, the beginning time of the ramping portion of the drive signal from being substantially affected by variations in an amplitude, such as the peak amplitude, of the drive signal.

In EP-A-0162116 even and odd fields have differing number of lines. Because of the phase modulation of the vertical sync signal, in order to produce these varying vertical scans, the amplitude of the vertical drive may change on a filed basis. As a result the time at which the vertical ramp begins may vary so that the series of our fields does not properly match.

In Patents Abstracts of Japan, Vol. 6. No. 170, there is disclosed a vertical deflection circuit which can operate at two rates for displaying letters and figures. The peak value of the vertical deflection current is held constant so as to maintain constant the size of the displayed image. However, this is not related to the problem of the present invention which is to prevent the timing of the sawtooth drive signal from being affected by variations in amplitude which will inevitably occur.

The present invention provides a television deflection apparatus responsive to a synchronizing input signal at a frequency that is a submultiple of a deflection frequency, comprising: means responsive to said synchronizing input signal for generating a control signal at a frequency that is a multiple of said frequency of said input signal and at a phase that is modulated, a sawtooth generator responsive to said control signal for generating a second signal of sawtooth waveform such that in a given period thereof said second signal includes a first ramping portion that corresponds with a trace interval and a second ramping portion that corresponds with a retrace interval, such that an interval that separates an end time of said first ramping portion of a given cycle of said second signal and a beginning time of said first ramping portion of a following cycle, and that includes said second ramping portion, has a duration that is the same in each cycle and that is unaffected by the modulation of said phase of said phase of said control signal; a deflection winding; and means coupled to said deflection winding and responsive to said second signal for generating in said deflection winding a trace scanning current when said first ramping portion occurs and a retrace scanning current when said second ramping portion occurs.

In accordance with an aspect of the invention, a television deflection apparatus that is responsive to a synchronizing input signal at a frequency that is related to a deflection frequency, generates a control signal at a frequency that is related to the frequency of the input signal and at a phase that is modulated. A sawtooth generator responsive to the control signal generates a second signal of sawtooth waveform that is synchronized by the control signal. The second signal has, in a given deflection cycle, a ramping first portion that changes in a first direction and a ramping second portion that changes in the opposite direction such that, in each deflection cycle, when the second signal begins ramping in the first direction, at a beginning time of the first portion of the second signal, the second signal is at a predetermined level that is unaffected by the modulation of the phase of the control signal. A deflection current that has, in accordance with the second signal, a sawtooth waveform is coupled to a deflection winding. The deflection current has a trace portion during a trace interval that corresponds with the first portion of the second signal. The trace portion of the deflection current is phase modulated in accordance with the control signal. The trace portion is maintained in phase, in each deflection cycle, with the control signals, as the phase of the control signal varies.

Normally, the synchronising signal is a pulse signal, the occurrence of a pulse specifying that a fresh sawtooth waveform is to begin.

In an embodiment of the present invention, the sawtooth waveform is arranged to return to the said uniform value, in no longer than the period of the uniform delay, from the value it reaches at the time when the synchronising signal specifies that a fresh cycle is to begin for any of the cycle lengths for the sawtooth waveform specified by the synchronising signal, and if the sawtooth waveform returns to the uniform value before the end of the uniform delay it remains at the uniform value for the rest of the delay period.

Preferably, the sawtooth waveform cycles specified by the synchronising signal begin at the start of the main sawtooth ramp. The main sawtooth ramp will normally continue until the synchronizing signal specifies that a fresh cycle is to begin, following which the flyback portion of the sawtooth waveform returns it to the uniform value during the uniform delay period. In this case, the uniform value is the value of the sawtooth waveform at the beginning of the main sawtooth ramp.

In the Drawing:
FIGURE 1, that includes FIGURES 1a and 1b, illustrates a vertical scan generator that includes a sawtooth generator embodying an aspect of the invention;
FIGURES 2a-2c illustrate waveforms useful for explaining the operation of the circuit of FIGURE 1;
FIGURE 3 illustrates a block diagram of a television receiver that includes the generator of FIGURE 1;
FIGURES 4A-4D are waveform diagrams illustrating the operation of the receiver of FIGURE 3;
FIGURE 5 illustrates an alternative arrangement, embodying another aspect of the invention, to the sawtooth generator of FIGURE 1; and
FIGURES 6a-6c illustrate waveforms useful for explaining the operation of the arrangement of FIGURE 5.

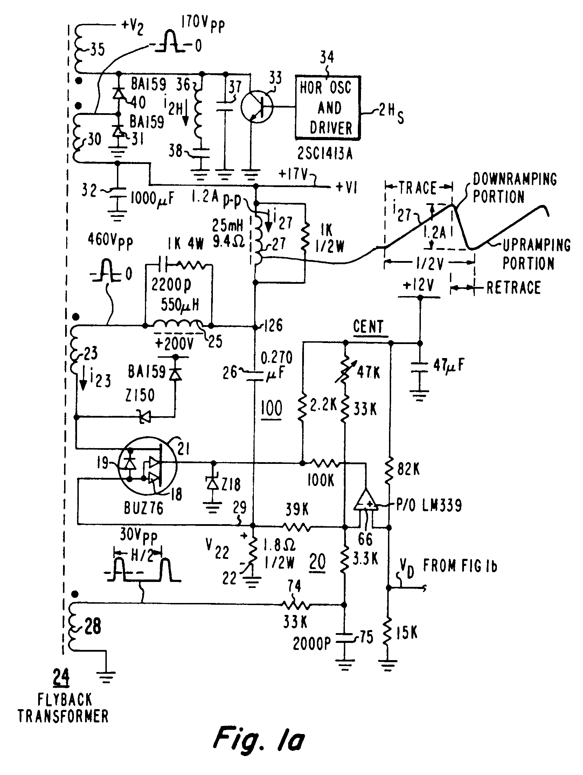

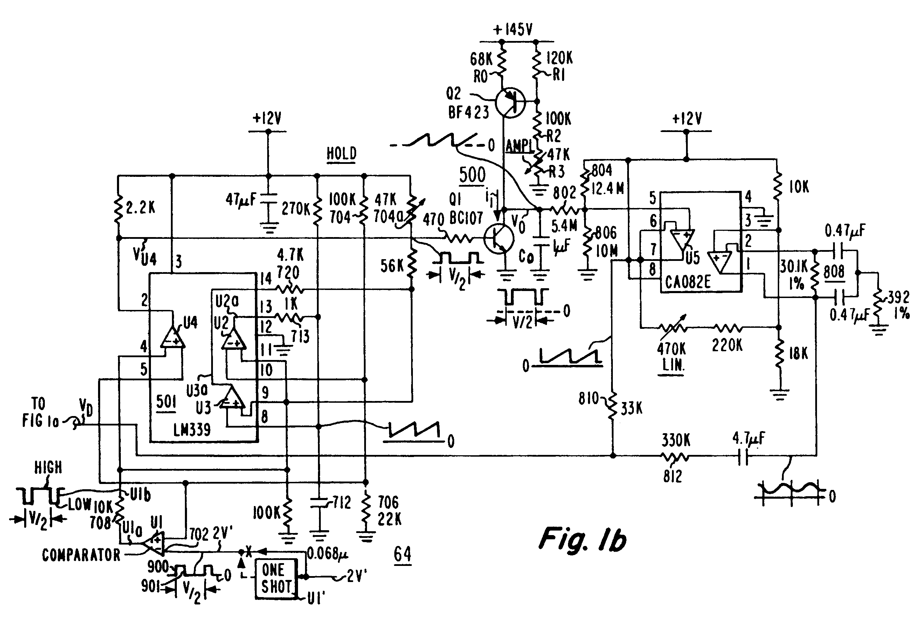

Referring to FIGURE 1b, a double frequency sync pulse 2V' is coupled to a vertical oscillator circuit 501 of a vertical scan generator 64, embodying an aspect of the invention. Sync pulse 2V' is applied to an input terminal 702 of an inverting amplifier U1, which is biased by a voltage that is formed between a resistor 704 and a resistor 706. Pulse 2V', that is phase modulated, is generated in a manner that is described later on. Pulse 2V' has a nominal frequency of 2fᵥ where f_{V} is the frequency of the vertical sync in a baseband television signal such as of the NTSC or the PAL standard. Pulses 2V' are separated by corresponding intervals of different durations, with the nominal duration being equal to ½V. V represents the vertical scanning interval of 20 milliseconds, in, for example, the PAL standard.

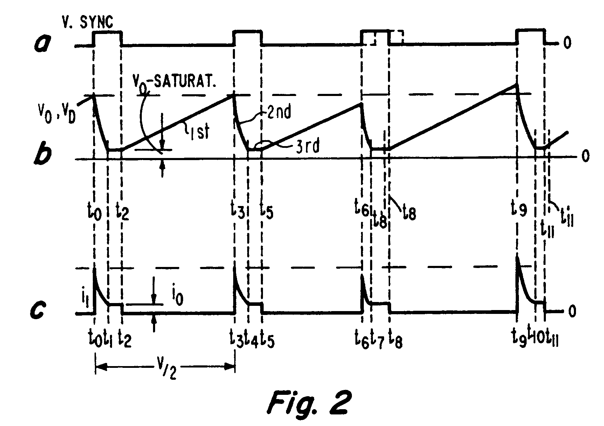

A high-to-low transition of a pulse U1a at an output terminal of amplifier U1 occurs when a leading edge 900 of pulse 2V' occurs. Pulse U1a is coupled via a resistor 708 to form a pulse U1b that is coupled to corresponding noninverting input terminals of an amplifier U2 and of an amplifier U3, and to an inverting input terminal of an amplifier U4. Consequently, amplifier U4 forms pulse V_{U4} at an output terminal. Pulse V_{U4} has a waveform of the same polarity and width as sync pulse 2V', that is shown during, for example, interval t₀-t₂ of FIGURE 2a.

Amplifiers U2 and U3 are coupled in a feedback mode to form the vertical oscillator. As a result of the positive feedback path formed by a resistor 720 of FIGURE 1b, that is coupled between an output terminal and the noninverting input terminal of amplifier U3, pulse U1b is maintained at a low level that keeps pulse V_{U4} a high level, during, for example, interval t₀-t₂ of FIGURE 2a. Simultaneously, amplifier U2 of FIGURE 1b causes a capacitor 712 to discharge rapidly. When the voltage at an inverting input terminal of amplifier U3, that corresponds with the voltage across capacitor 712, becomes lower than the corresponding level of pulse U1b, amplifier U3 ceases conduction and output voltage U3a goes high. Pulse U1b, however, stays low until a trailing edge 901 of pulse 2V' occurs. Conversely, pulse V_{U4} stays high throughout the interval that is between leading edge 900 and trailing edge 901 of pulse 2V'. In the event pulses 2V' are missing, pulses V_{U4} are derived from pulses U3a that are obtained from the output of amplifier U3 and that are applied to amplifier U4 via resistor 720.

Pulse V_{U4} is coupled to control a ramp generator circuit 500, embodying an aspect of the invention, that generates a ramp voltage V₀ of FIGURE 2b. Ramp generator circuit 500 comprises a current source transistor Q2 biased by resistors R0, R1, R2 and R3 to supply current to a current integrating capacitor Co coupled in parallel with the conduction path of a transistor switch Q1. Generator 500 produces an output ramp voltage V₀, shown in solid lines in FIGURE 2b. capacitor Co of FIGURE 1b begins discharging when leading edge 900 of pulse 2V' occurs and is discharged to the saturation voltage level of transistor Q1 prior to the trailing edge of each pulse V_{U4}, such as prior to time t₂ of FIGURE 2b. Pulse V_{U4} of FIGURE 1 causes transistor Q1 to clamp voltage V₀ to the saturation voltage level of transistor Q1, thus preventing voltage V₀ from upramping prior to the trailing edge of pulse V_{U4}.

The phase modulation of pulses V_{U4} of FIGURE 2a, that are separated by intervals having correspondingly different lengths, causes correspondingly different peak values of ramp voltage V₀ to occur, such as at times t₀, t₃, t₆ and t₉, respectively, of FIGURE 2b.

An upramping first portion of voltage V₀ occurs during an interval such as interval t₂-t₃ of FIGURE 2b. The first portion begins upramping from a predetermined constant level, that is the saturation voltage of transistor Q1 of FIGURE 1b, in a way that is not affected by phase modulation of sync pulse 2V'. Thus, the upramping first portion begins upramping at an instant, such as time t₂ of FIGURE 2b. A downramping second portion of voltage V₀ occurs, for example, during interval t₀-t₁. A flat third portion occurs during interval t₁-t₂.

In accordance with an aspect of the invention, the sum of the intervals that corresponds with the second and third portions is a predetermined constant that is not affected by the peak value of voltage V₀ of FIGURE 1. The interval between the beginning of the downramping portion and the beginning time of the upramping portion of voltage V₀, such as interval t₀-t₂ of FIGURE 2b, may be maintained, illustratively, constant so that it is unaffected by the phase modulation of pulse 2V' of FIGURE 1.

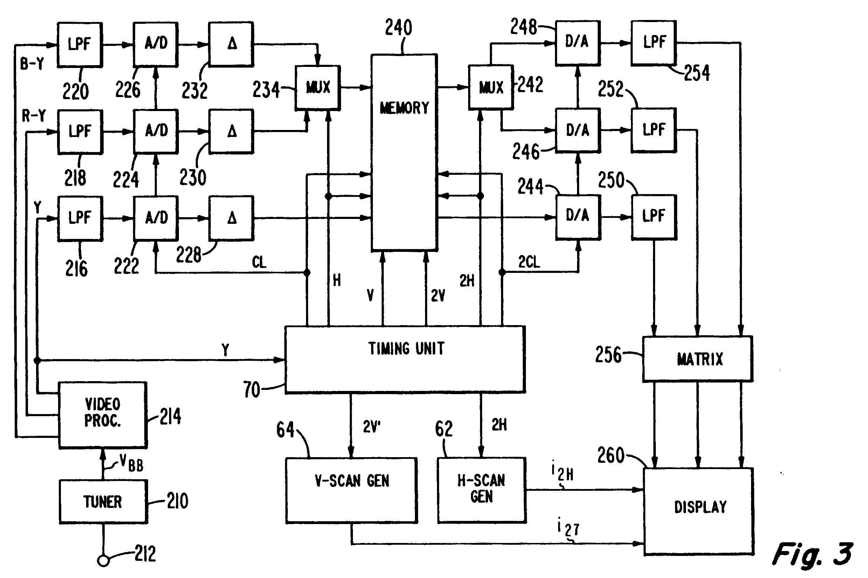

It should be understood that the width of sync pulse 2V', that is generated by timing unit 70 of FIGURE 3, may be adjusted by, for example, a one-shot multivibrator U1' that is coupled as shown by the dash line in FIGURE 1.

Ramp voltage V₀ is DC biased by means of resistors 802, 804 and 806 and buffered by an amplifier U5. The output of amplifier U5 is applied to a linearity correction circuit, indicated generally as 808 which produces a smoothed linearity correction signal that is added to the signal at the output of amplifier U5 by means of resistors 810 and 812 to form a ramp voltage V_{D} having the same characteristics that were discussed before with respect to ramp voltage V₀ and that, additionally, is linearity corrected.

As shown in FIGURE 1a, the invention advantageously also includes a switched vertical deflection circuit 100 that is controlled by a vertical control circuit 20 of vertical scan generator 64. The operation of deflection circuit 100 and of control circuit 20 is described in detail in U.S. Patent No. 4,544,864 in the name of P.E. Haferl, entitled SWITCHED VERTICAL DEFLECTION CIRCUIT WITH BIDIRECTIONAL POWER SUPPLY. Control circuit 20 provides, in accordance with voltage V_{D}, width modulated horizontal, or line rate, switching signals to a switching element 21, illustratively shown as comprising an integrated transistor 18 and antiparallel diode 19. Transistor 18 may comprise a power field effect transistor, which is advantageous when the horizontal rate is higher than the horizontal frequency in, for example, the PAL standard. Such high frequency may be used with computer monitor or video display terminals. Switching element 21 is coupled, via a winding 23 of a flyback transformer 24 that is series coupled to a storage coil 25, to a terminal 126 of a storage capacitor 26. Terminal 126 of capacitor 26 is coupled to a vertical deflection winding 27. The other terminal of vertical deflection winding 27 is coupled to a voltage supply designated +V1. The +V1 supply is generated via a winding 30 of flyback transformer 24, a rectifying diode 31 and a filter capacitor 32. The +V1 supply may also be used to power other receiver circuits.

A horizontal output transistor 33 is switched at the horizontal deflection rate by signals applied to its base from horizontal oscillator and driver circuit 34. The collector of transistor 33 is coupled to a voltage supply designated +V2 via a winding 35 of flyback transformer 24. Transistor 33 is also coupled to a horizontal deflection winding 36, an S-shaping capacitor 38, and a resonant retrace capacitor 37. A diode 40 is coupled in series with diode 31 between winding 30 and the collector of transistor 33. The switching operation of transistor 33 generates a horizontal deflection current i_{2H} at twice the horizontal frequency f_{H} of the sync signal of a baseband video signal V_{BB} that is mentioned later on.

The operation of vertical deflection circuit 100 consists of the horizontal rate charge and discharge of storage capacitor 26 which supplies a vertical deflection current i₂₇ that flows in winding 27. Horizontal rate switching is performed by switching element 21.

At the beginning of vertical trace, during each horizontal period, transistor 18 of switching element 21 is conductive for a very short interval that occurs immediately prior to horizontal retrace. Consequently, a current i₂₃ in winding 23 flows in a direction opposite to that of the arrow that causes capacitor 26 to be charged to a voltage that is more positive than voltage +V1. The resulting voltage at terminal 126, that is more positive than voltage +V1, causes deflection current i₂₇ to flow in winding 27 in a direction opposite to that of the arrow. During the vertical scan, control circuit 20 progressively increases the conduction interval of transistor 18 that occurs in each horizontal trace. When transistor 18 conducts, capacitor 26 is discharged by an amount that is proportional to the conduction time of transistor 18. The progressive increase in the conduction time of transistor 18 causes the voltage across capacitor 26 to decrease progressively during vertical trace. The voltage across capacitor 26 decreases because more charge is taken away by current i₂₃ during the conduction time of transistor 18, that occurs during horizontal trace, than is added to it during the corresponding horizontal retrace. At the end of vertical trace, the voltage at terminal 126 is less positive than voltage +V1 and deflection current i₂₇ flows in the direction of the arrow. It follows that from the beginning to the end of vertical trace, deflection current i₂₇ changes in an upramping manner and reverses polarity at approximately the center of vertical trace.

During vertical retrace, transistor 18 is nonconductive; consequently, deflection winding 27 and capacitor 26 undergo a half cycle of oscillation. A resulting vertical retrace voltage charges capacitor 26 to a voltage that is larger than voltage +V1, that causes deflection current i₂₇ to reverse its polarity.

In accordance with an aspect of the invention, voltage V_{D} is fed to a noninverting input terminal of comparator 66 of FIGURE 1a. The waveform of voltage V_{D} may be illustrated as the same waveform V₀ of FIGURE 2b, neglecting linearity, shaping, DC scale, and DC level shifting. Horizontal retrace pulses from winding 28, applied via a resistor 74, charge a capacitor 75 to obtain a horizontal ramp which is compared with the vertical sawtooth of voltage V_{D}. Comparator 66 serves as a pulse width modulator. The output of comparator 66 provides base drive to transistor 18.

It can be seen that the current through resistor 22 is equal to the deflection current i₂₇. Therefore, the voltage developed across resistor 22 is proportional to current i₂₇, the vertical deflection current. The voltage developed across deflection current sampling resistor 22 is produced by deflection current i₂₇ and provides negative feedback to vertical control circuit 20. This feedback provides information to vertical control circuit 20 to enable the driving of transistor 18 into conduction for the appropriate duration each horizontal interval to generate vertical deflection current i₂₇. Current i₂₇, during vertical trace, is therefore linearly proportional to sawtooth ramp voltage V_{D}.

When the leading edge of pulse 2V' or V_{U4} occurs, such as, for example, immediately prior to time t₀ of FIGURE 2b, the downramping, second portion of voltage V_{D} begins. The beginning of the downramping portion of voltage V_{D} causes deflection current i₂₇ in winding 27 of FIGURE 1 to begins its corresponding downramping retrace portion. When the trailing edge of pulse V_{U4} of FIGURE 2a occurs, the upramping trace portion of deflection current i₂₇ of FIGURE 1 begins.

Voltage V_{D} controls the instantaneous level of deflection current i₂₇ during the vertical trace portion of deflection current i₂₇. As described before, in each vertical scanning cycle, voltage V_{D} is at the same level when the trailing edge of pulse V_{U4} of FIGURE 2a occurs.

In accordance with a further aspect of the invention, because of the way voltage V_{D} is generated, the ramping trace portion in each deflection cycle of both voltage V_{D} and of deflection current i₂₇ of FIGURE 1 is in phase with, and follows phase variations of, for example, the corresponding leading edge 900 of pulse 2V'.

As described later on, the phase modulation of pulse 2V' provides the precise timing that is required to provide a displayed image in which proper image registration occurs, such that even fields overlay even fields, odd fields overlay odd fields, and even and odd field pairs are interlaced.

It should be understood that as a result of the way the waveform of voltage V_{D} of FIGURE 2b is generated, the interval from the end of vertical trace of a given deflection cycle of deflection current i₂₇ of FIGURE 1 to the beginning of vertical trace of the following deflection cycle is also constant.

The DC component of the vertical sawtooth of voltage V₀ of FIGURE 2b should preferably be preserved and transmitted to the deflection winding 27 of FIGURE 1. DC coupling should preferably be used between the sawtooth or ramp generator circuit 500 and vertical deflection circuit 100 as well as to vertical deflection winding 27. DC coupling is preferred so that the phase modulation of pulse 2V' does not change the level of deflection current i₂₇ that corresponds with a given level of voltage V₀.

The above-mentioned features of deflection current i₂₇, embodying aspects of the invention, may be useful, for example, in the television receiver circuit of FIGURE 3, similar to a circuit that is described in the aforementioned den Hollander et.al. application, where the vertical deflection current is phase and amplitude modulated in accordance with a phase modulated vertical sync signal.

The receiver of FIGURE 3, that generates pulse 2V' of FIGURE 1, includes a tuner 210 of FIGURE 3 having an input terminal 212 for connection to an antenna or other source of video input signal and having an output for supplying baseband video output signal V_{BB}, that was mentioned before, to a video processing unit 214. For purposes of illustration it will be assumed that the baseband video output signal is of the PAL standard. It will be appreciated, however, that the principles of the invention apply also to other standard interlaced video signal formats. Video processor 214 includes a PAL decoder that converts the input signal to Y, R-Y and B-Y component form. The signal could be processed, if desired in R, G, B component form but R, G, B components each have full video bandwidth while the color difference signals (R-Y, B-Y) have a lower bandwidth. Accordingly, a field store for color difference signals can be realized with fewer memory elements than would be the case if processing were done using R, G, B components.

The Y, R-Y and B-Y component signal are low pass filtered by filters 216, 218 and 220 and converted to digital form by analog-to-digital (A/D) converters 222, 224 and 226 for storage in a memory 240 Filters 216, 218 and 220 minimize aliasing and have cutoff frequencies of 7.5 MHz for Y and 2.8 MHz for the color difference signals R-Y and B-Y for the assumed PAL input signal. Lower cut off frequencies would be appropriate for NTSC standard signals.

Converters 222, 224 and 226 digitize the low pass filtered components to an 8-bit resolution using a sample clock CL that is phase locked to a multiple of horizontal sync in order to obtain a constant number of samples per horizontal line. After A/D conversion, the digitized components are applied to memory 240 via respective delay units 228, 230 and 232. The delay units may be variable and are included to equalize the delay times of the three input signal paths. The color difference components R-Y and B-Y are applied to memory 240 via a multiplex switch (MUX) 234 controlled by a horizontal line rate signal H. Switch 234 combines the two 8-bit wide color differences into a single 8-bit wide signal to minimizing storage requirements in memory 240.

As one field of the multiplexed 8-bit color difference signal and the 8-bit luma signal are stored in memory 240, a field previously stored is read out twice using a read clock signal 2 CL of double the write clock CL frequency. This doubles the field rate (100 Hz for PAL, 120 Hz for NTSC) and so reduces the perception of flicker where the signal is displayed on display unit 260. A multiplex switch 242 demultiplexes the color difference signals which, with the double field rate luma signal, are converted back to analog form by digital to analog converters 244, 246 and 248. Low pass filters 250, 252 and 254 suppress the repeat spectra after D/A conversion, suitable cut-off frequencies being 13.5 MHz for luma and 6.75 MHz for chroma. The double field rate analog signals are then converted to R G B form for application to display 260 which is synchronized by means of double speed horizontal deflection current i_{2H} and vertical deflection current i₂₇ provided by horizontal scan generator 62 and vertical scan generator 64, respectively. Generator 62 generates deflection current i_{2H} at twice the frequency f_{H} of the horizontal sync of baseband video output signal V_{BB}.

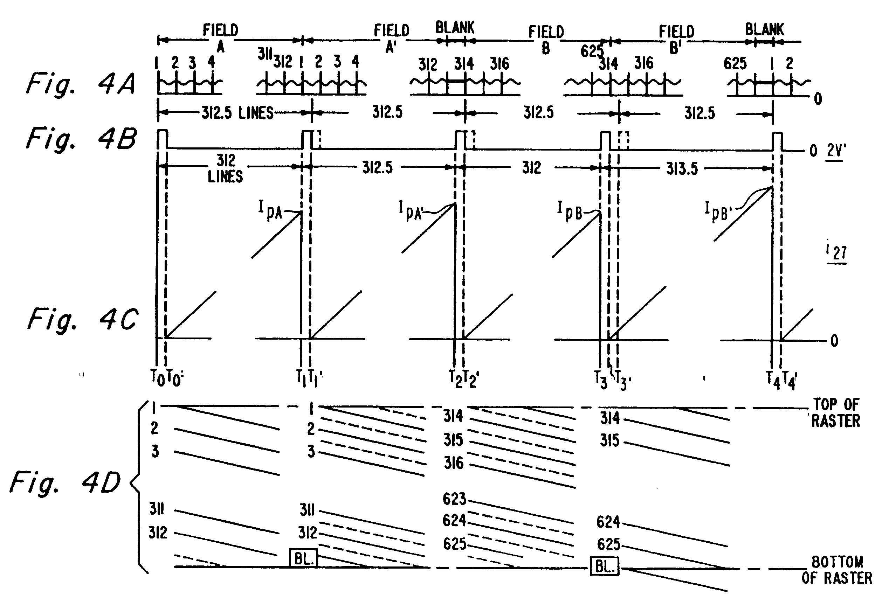

A field consists of 312.5 lines in the PAL standard. At double speed this field together with its repetition must consist of 625 lines. This can be realized when one of the two fields consists of 312 lines and the other consists of 313 lines. Memory 240 of FIGURE 3 is supplied with timing signals from timing unit 70 to provide the field sequence shown in FIGURE 4A in which 312 lines are produced in the first read cycle (fields A or B) and 313 lines are produced during the second memory read cycle (field A' or B'), with the 313th line being blank.

The double field rate vertical sync pulse 2V' required for vertical scan generator 64 has the pulse pattern illustrated in solid line in FIGURE 4B. For comparison purposes, pulses in dashed-line are provided, which represent a situation of equidistant double rate vertical sync pulses having a period of 312.5 line. The solid line pulses represent pulse signal 2V' of FIGURES 2 and 3, which is periodic on a four-field basis. As shown, there are 312 lines in field A, 312.5 lines in the repeat field A', 312 lines in field B and 313.5 lines in repeat field B'. Pulse 2V' controls switched vertical deflection circuit 100, as described before, to produce the vertical scan waveforms of vertical deflection current i₂₇. The vertical trace portions of current i₂₇ are shown schematically in FIGURE 4C. The scanning current waveform sequence of FIGURE 4c results in the interlace pattern shown in FIGURE 4D in which the first fields (A, A') overlay first fields, the second fields overlay second field (B, B') and in which the first and second field pairs (AA', BB') are interlaced. For purpose of comparison, the dashed lines in FIG. 4D illustrate scan lines which would result if sync pulses 2V' of FIGURE 4B were equidistant rather than being shifted or phase modulated. To ensure proper registration of displayed fields, the sawtooth voltage of FIG. 4C provided by ramp generator circuit 500, that was described before, always starts at the same value and all retrace times (T0-T0', T1-T1', T2-T2', etc.) are equal.

Timing signals for controlling the digital converters, memory, switches and scan generators are provided by timing unit 70 of FIGURE 3. Unit 70 generates, as described in the above referenced den Hollander et. al. application, two-field and four-field pulse sequences for memory control and for scan generation of pulse 2V' for ensuring that even fields overlay even fields, odd fields overlay odd fields, and that even and odd pairs of fields are interlaced when the double field rate signal is displayed.

The irregularly spaced double field rate vertical sync pulses 2V', absent the operation of ramp generator circuit 500 and of vertical oscillator circuit 501 of FIGURE 1, embodying aspects of the invention, may, disadvantageously, produce a variation in the phase of the trace portion of deflection current i₂₇ relative to the corresponding pulse 2V' over the four field sequence.

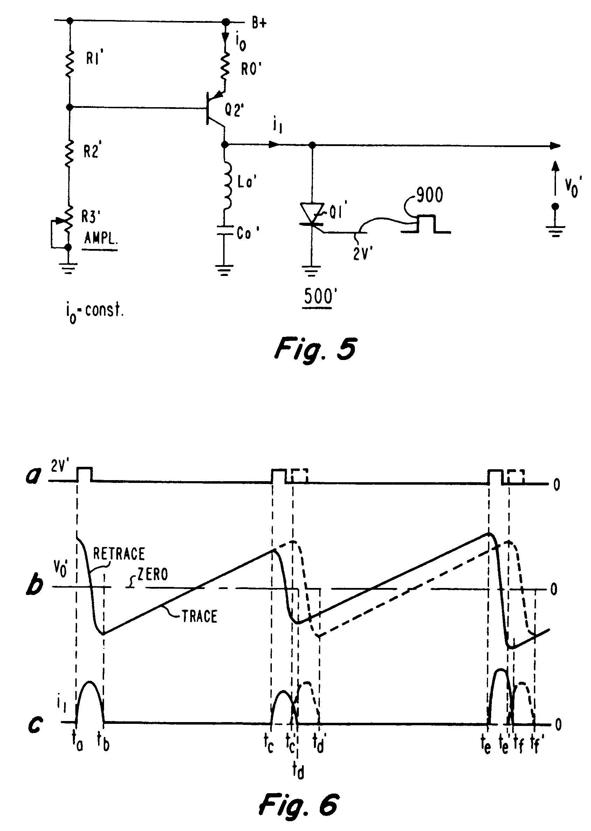

FIGURE 5 illustrates a ramp generator circuit 500', embodying a further aspect of the invention, that performs the analogous function to that of circuit 500 of FIGURE 1. FIGURES 6a-6c illustrate the corresponding waveforms associated with circuit 500' of FIGURE 5. Similar numbers and symbols indicate similar items and functions in FIGURES 1, 5 and 6a-6c.

In circuit 500' of FIGURE 5, a switch Q₁', which may be a thyristor as shown, or alternatively a transistor in series with a diode, is coupled across a resonant circuit that includes an inductor Lo' and a capacitor Co' in series. The series arrangement of inductor Lo' and capacitor Co' is coupled during vertical trace in the current path of an emitter current i₀ of a transistor Q₂' that operates as a current source.

When leading edge 900 of pulse 2V' occurs, switch Q₁' becomes conductive to initiate retrace. Switch Q₁', when conductive, couples conductor Lo' and capacitor Co' in parallel. Consequently, a half period of resonant oscillation occurs in inductor Lo' and capacitor Co' that produces the retrace portion of voltage V₀' of FIGURE 2b. In the second half period of the oscillation, switch Q₁' is cut-off. The displacement, or phase modulation, of pulse 2V' needed to produce correct raster positioning is only half of the displacement required in the case of FIGURE 1. This is because voltage V₀ in FIGURE 5 is mirrored around the zero-axis during retrace. For reference purposes, the sawtooth which would result from equidistant sync pulses is shown in dash lines in FIGURE 6b.

The retrace interval, such as during interval tₐ-t_{b} of FIGURE 6b, is not substantially affected by the voltage across capacitor Co' of FIGURE 5 at the end of vertical trace; rather, it is determined by the resonance frequency of inductor Lo' and of capacitor Co'.

In accordance with yet another aspect of the invention, as in the case of voltage V₀ of FIGURE 2b, the phase of the trace portion of voltage V₀' of FIGURE 6b relative to that of the corresponding pulse 2V' of FIGURE 6a is not substantially affected by the phase modulation of pulses 2V'.

## Claims

1. A television deflection apparatus responsive to a synchronizing input signal at a frequency that is a submultiple of a deflection frequency, comprising:
means (70) responsive to said synchronizing input signal for generating a control signal (2V') at a frequency that is a multiple of said frequency of said input signal and at a phase that is modulated;
a sawtooth generator (500) responsive to said control signal (2V') for generating a second signal (V₀) of sawtooth waveform such that in a given period thereof said second signal (V₀) includes a first ramping portion that corresponds with a trace interval and a second ramping portion that corresponds with a retrace interval, such that an interval that separates an end time of said first ramping portion of a given cycle of said second signal (V₀) and a beginning time of said first ramping portion of a following cycle, and that includes said second ramping portion, has a duration that is the same in each cycle and that is unaffected by the modulation of said phase of said control signal (2V');
a deflection winding (27); and
means (100) coupled to said deflection winding (27) and responsive to said second signal (V₀) for generating in said deflection winding (27) a trace scanning current when said first ramping portion occurs and a retrace scanning current when said second ramping portion occurs.

2. An apparatus according to claim 1, characterized in that said sawtooth generator (500) comprises a capacitance (Co), a source (Q2) of current coupled to said capacitance (co) for charging said capacitance (Co) to develop said first portion of said second signal (V₀), a switch (Q1) coupled to said capacitance (Co) for discharging said capacitance (Co) to develop said second portion of said second signal (V₀).

## Patentansprüche

1. Ablenkvorrichtung für ein Fernsehgerät, die auf ein synchronisierendes Eingangssignal mit einer Frequenz anspricht, die ein Teil-Vielfaches einer Ablenkfrequenz ist, umfassend:
Mittel (70), die auf das synchronisierende Eingangssignal ansprechen, um ein Steuersignal (2V') mit einer Frequenz, die ein Vielfaches der Frequenz des Eingangssignals ist und mit einer Phase, die moduliert ist, zu erzeugen;
einen Sägezahngenerator (500), der auf das Steuersignal (2V') anspricht, um ein zweites Signal (V₀) mit Sägezahnform derart zu erzeugen, daß in einer gegebenen Periode von ihm das zweite Signal (V₀) einen ersten schrägen Teil, der mit einem Hinlauf-Intervall korrespondiert, und einen zweiten schrägen Teil, der mit einem Rücklauf-Intervall korrespondiert, enthält, so daß ein Intervall, das eine Endzeit des ersten schrägen Teils einer gegebenen Periode des zweiten Signals (V₀) und eine Anfangszeit des ersten schrägen Teils einer folgenden Periode trennt, und das den zweiten schrägen Teil enthält, eine Dauer hat, die in jeder Periode gleich ist und die von der Modulation der Phase des Steuersignals (2V') unbeeinflußt ist;
eine Ablenkwicklung (27); und
Mittel (100), die mit der Ablenkwicklung (27) verbunden sind und auf das zweite Signal (V₀) ansprechen, um in der Ablenkwicklung (27) einen Hinlauf-Ablenkstrom zu erzeugen, wenn der erste schräge Teil auftritt, und einen Rücklauf-Ablenkstrom, wenn der zweite schräge Teil auftritt.

2. Vorrichtung nach Anspruch 1, dadurch gekennzeichnet, daß der Sägezahngenerator (500) eine Kapazität (Co), eine mit der Kapazität (Co) verbundene Stromquelle (Q2) zum Laden der Kapazität (Co), um den ersten Teil des zweiten Signals (V₀) zu erzeugen, und einen Schalter (Q1) enthält, der mit der Kapazität (Co) verbunden ist, um die Kapazität (Co) zu entladen und den zweiten Teil des zweiten Signals (V₀) zu erzeugen.

## Revendications

1. Appareil de déflexion pour télévision sensible à un signal d'entrée de synchronisation à une fréquence qui est un sous-multiple d'une fréquence de déflexion, comprenant :
un moyen (70) sensible audit signal d'entrée de synchronisation pour générer un signal de commande (2V') à une fréquence qui est un multiple de ladite fréquence dudit signal d'entrée et à une phase qui est modulée.
un générateur de dent de scie (500) sensible audit signal de commande (2V') pour produire un second signal (V₀) de forme d'onde en dent de scie de telle sorte que dans une période donnée de ce dernier ledit second signal (V₀) inclue une première partie en pente qui correspond à un intervalle de tracé et une seconde partie en pente qui correspond à un intervalle de retour, de telle sorte qu'un intervalle qui sépare un instant d'extrémité de ladite première partie en pente d'un cycle donné dudit second signal (V₀) et un instant de départ de ladite première partie en pente d'un cycle suivant et qui inclut ladite seconde partie en pente, possède une durée qui est la même dans chaque cycle et qui n'est pas affectée par la modulation de ladite phase dudit signal de commande (2V');
un enroulement de déflexion (27) ; et
un moyen (100) couplé audit enroulement de déflexion (27) et sensible audit second signal (V₀) pour générer dans ledit enroulement de déflexion (27) un courant de balayage de tracé lorsque ladite première partie en pente se produit et un courant de balayage de retour lorsque ladite seconde partie en pente se produit.

2. Appareil selon la revendication 1 , caractérisé en ce que ledit générateur de dent de scie (500) comprend une capacité (Co), une source (Q2) de courant couplée à ladite capacité (Co) pour charger ladite capacité (Co) afin de développer ladite première partie dudit second signal (V₀), un commutateur (Q1) couplé à ladite capacité (Co) pour décharger ladite capacité (Co) afin de développer ladite seconde partie dudit second signal (V₀).
